# EUROPÄISCHE PATENTSCHRIFT

(11) **EP 3 984 797 B1**
(45) Veröffentlichungstag und Bekanntmachung des Hinweises auf die Patenterteilung: **17.04.2024**
(21) Anmeldenummer: 21202319.6
(22) Anmeldetag: 13.10.2021
(51) Int. Cl.: B60K 1/00, B60K 17/08, B60K 17/16

(54) **GETRIEBEMECHANISMUS UND ANTRIEBSSYSTEM FÜR EIN KRAFTFAHRZEUG**
TRANSMISSION MECHANISM AND DRIVE SYSTEM FOR A MOTOR VEHICLE
MÉCANISME DE TRANSMISSION ET SYSTÈME D'ENTRAÎNEMENT POUR UN VÉHICULE AUTOMOBILE

(30) Priorität: 19.10.2020 CN 202011119563
(43) Veröffentlichungstag der Anmeldung: 20.04.2022
(73) Patentinhaber: ZF Friedrichshafen AG, 88046 Friedrichshafen (DE)
(72) Erfinder: YU, Jiehao, Shanghai, 201615 (CN); ZHONG, Liang, Shanghai, 201615 (CN)

(56) Entgegenhaltungen:
- WO-A1-2015/149874
- CN-U- 207 145 546
- DE-B3-102018 129 938
- FR-A1- 2 693 527

## Beschreibung

### Technisches Gebiet

Die vorliegende Erfindung betrifft einen Getriebemechanismus mit zwei Gängen für ein Kraftfahrzeug. Des Weiteren betrifft die vorliegende Erfindung ein Antriebssystem, das einen derartigen Getriebemechanismus umfasst, für ein Kraftfahrzeug.

### Stand der Technik

Ein rein elektrisches Auto bezieht sich auf ein Fahrzeug, bei dem unter Verwendung einer Bord-Stromversorgung als Energiequelle Räder durch einen Elektromotor angetrieben werden. Gegenüber Kraftfahrzeugen mit Verbrennungsmotor zeichnen sich rein elektrische Autos durch geringere Umweltbelastung aus und weisen somit gute Anwendungsaussichten auf. Des Weiteren entwickeln sich elektrische Antriebssysteme angesichts der Anforderungen an die Leistungsdichte und den Bauraum eines Elektromotors in Richtung der Integration und Mehrgängigkeit.

Gegenüber einem System mit einem einzigen Gang werden bei einem elektrischen Antriebssystem mit zwei Gängen das Achslast-Drehmoment und die maximale Fahrzeuggeschwindigkeit berücksichtigt und dank eines höheren Drehzahlverhältnisses wird eine Möglichkeit für die Miniaturisierung und die Integration eines Elektromotors geöffnet. Darüber hinaus kann bei einem elektrischen Antriebssystem mit zwei Gängen ein Betriebspunkt von einem Bereich mit höherer Drehzahl in einen Bereich mit niedrigerer Drehzahl verschoben werden, um einen Leistungsabfall infolge eines Drehzahlanstiegs auszugleichen, somit die Effizienz zu erhöhen und den Bereich für eine hohe Effizienz des Elektromotors zu erweitern.

Jedoch kann ein elektrisches Antriebssystem mit zwei Gängen im Stand der Technik, unabhängig davon, ob es in einem ersten Gang oder in einem zweiten Gang arbeitet, lediglich eine zweistufige Untersetzung erreichen, wodurch das Ausgangsdrehmoment des Fahrzeugs beim Fahren mit einer niedrigen Geschwindigkeit beschränkt wird.

Das zur vorliegenden Erfindung nächstliegende Dokument DE 10 2018 129 938 B3 offenbart einen Getriebemechanismus für ein Kraftfahrzeug, welcher umfasst: ein Differenzial (AD), das ein Differenzialgehäuse aufweist, an dem ein Hauptuntersetzungszahnrad (S1B) vorgesehen ist, zwei Ausgangswellen (WSL, WSR), die sich ausgehend von zwei Seiten des Differenzials erstrecken, wobei die zwei Ausgangswellen jeweils Leistung auf ein Rad eines Fahrzeugs übertragen, einen ersten Zahnradsatz, der aus einem ersten Zahnrad (S3A) und einem zweiten Zahnrad (S3B), die miteinander in Eingriff stehen, gebildet ist, wobei das erste Zahnrad (S3A) koaxial mit den zwei Ausgangswellen (WSL, WSR) angeordnet ist und Leistung, die das Fahrzeug zum Fahren antreibt, in das erste Zahnrad eingegeben wird, einen zweiten Zahnradsatz, der aus einem dritten Zahnrad (S1A) und dem an dem Differenzialgehäuse angeordneten Hauptuntersetzungszahnrad (S1B), die miteinander in Eingriff stehen, gebildet ist, wobei das dritte Zahnrad (S1A) koaxial mit dem zweiten Zahnrad (S3B) angeordnet ist, einen dritten Zahnradsatz, der aus einem vierten Zahnrad (S2A) und einem fünften Zahnrad (Z1), die miteinander in Eingriff stehen, gebildet ist, wobei das vierte Zahnrad (S2A) koaxial mit dem zweiten Zahnrad (S3B) angeordnet ist.

Die Patentanmeldungen WO 2015/149874 A1 und FR 2 693 527 A1 und das chinesische Gebrauchsmuster CN 207 145 546 U offenbaren gleichfalls ähnliche, dem vorliegenden Erfindungsgegenstand jedoch ferner liegende Getriebemechanismen mit mehreren Gängen.

### Offenbarung

Die vorliegende Erfindung stellt einen Getriebemechanismus für ein Kraftfahrzeug bereit, mit dem das obige Problem gelöst wird. Der Getriebemechanismus umfasst: ein Differenzial, das ein Differenzialgehäuse aufweist, an dem ein Hauptuntersetzungszahnrad vorgesehen ist, zwei Ausgangswellen, die sich ausgehend von zwei Seiten des Differenzials erstrecken, wobei die zwei Ausgangswellen jeweils Leistung auf ein Rad eines Fahrzeugs übertragen, einen ersten Zahnradsatz, der aus einem ersten Zahnrad und einem zweiten Zahnrad, die miteinander in Eingriff stehen, gebildet ist, wobei das erste Zahnrad koaxial mit den zwei Ausgangswellen angeordnet ist und Leistung, die das Fahrzeug zum Fahren antreibt, in das erste Zahnrad eingegeben wird, einen zweiten Zahnradsatz, der aus einem dritten Zahnrad und dem an dem Differenzialgehäuse angeordneten Hauptuntersetzungszahnrad, die miteinander in Eingriff stehen, gebildet ist, wobei das dritte Zahnrad koaxial mit dem zweiten Zahnrad angeordnet ist, einen dritten Zahnradsatz, der aus einem vierten Zahnrad und einem fünften Zahnrad, die miteinander in Eingriff stehen, gebildet ist, wobei das vierte Zahnrad koaxial mit dem zweiten Zahnrad und das fünfte Zahnrad koaxial mit den zwei Ausgangswellen angeordnet ist, einen vierten Zahnradsatz, der ein sechstes Zahnrad und ein siebtes Zahnrad, die an ein und derselben Welle befestigt sind, umfasst, wobei das sechste Zahnrad in Eingriff mit dem fünften Zahnrad und das siebte Zahnrad in Eingriff mit dem an dem Differenzialgehäuse angeordneten Hauptuntersetzungszahnrad steht, und eine Umschalteinrichtung, die koaxial mit dem zweiten Zahnrad angeordnet ist und von dem zweiten Zahnrad angetrieben wird, wobei die Umschalteinrichtung selektiv an das dritte Zahnrad oder an das vierte Zahnrad gekoppelt werden kann.

Durch Vorsehen einer Umschalteinrichtung kann der Getriebemechanismus eine zweistufige Drehzahlverstellung ermöglichen. Des Weiteren kann der Getriebemechanismus, der in einem zweiten Gang betrieben wird, eine vierstufige Untersetzung erreichen, indem das fünfte Zahnrad koaxial mit den zwei Ausgangswelle angeordnet ist, das sechste Zahnrad und das siebte Zahnrad an ein und derselben Welle befestigt sind, das sechste Zahnrad in Eingriff mit dem fünften Zahnrad und das siebte Zahnrad in Eingriff mit dem an dem Differenzialgehäuse angeordneten Hauptuntersetzungszahnrad steht.

Die vorliegende Erfindung stellt ferner ein Antriebssystem für ein Kraftfahrzeug bereit. Das Antriebssystem umfasst: einen Elektromotor, der eine hohle Rotorwelle aufweist, den oben beschriebenen Getriebemechanismus, wobei die hohle Rotorwelle des Elektromotors koaxial mit den zwei Ausgangswellen angeordnet und an das erste Zahnrad des ersten Zahnradsatzes des Getriebemechanismus angeschlossen ist.

### Kurzbeschreibung der Figuren

Durch die nachfolgende Beschreibung unter Bezugnahme auf die beiliegenden Zeichnungen werden die Einzelheiten und die Vorteile der vorliegenden Erfindung leichter verständlich gemacht. Darin zeigen
Fig. 1 eine schematische Darstellung eines Antriebssystems für ein Kraftfahrzeug nach einem Ausführungsbeispiel der vorliegenden Erfindung,
Fig. 2 eine schematische Darstellung des Antriebssystems beim Betrieb des Getriebemechanismus in einem ersten Gang, und
Fig. 3 eine schematische Darstellung des Antriebssystems beim Betrieb des Getriebemechanismus in einem zweiten Gang.

### Ausführliche Ausführungsformen

Nachfolgend erfolgt eine nähere Beschreibung anhand eines Ausführungsbeispiels der vorliegenden Erfindung unter Bezugnahme auf die beiliegende Zeichnung.

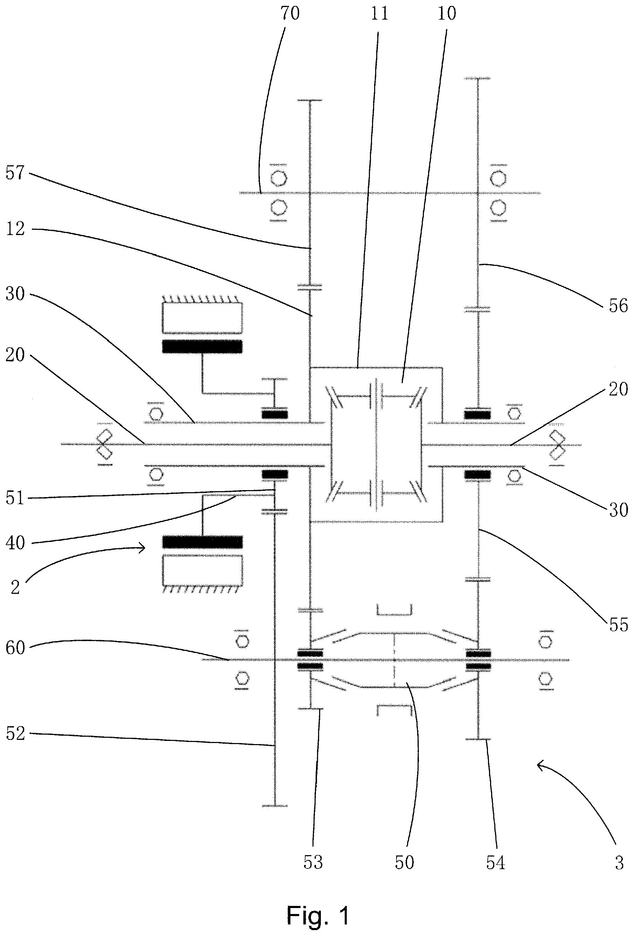

Fig. 1 zeigt schematisch ein Antriebssystem für ein Kraftfahrzeug nach einem Ausführungsbeispiel der vorliegenden Erfindung. Das Antriebssystem umfasst einen Elektromotor 2, der als Antriebsmaschine dient, und einen Getriebemechanismus 3 mit zwei Gängen.

Der Getriebemechanismus 3 umfasst ein Differenzial 10. Das Differenzial 10 weist ein Differenzialgehäuse 11 auf. An dem Differenzialgehäuse 11 ist ein Hauptuntersetzungszahnrad 12 vorgesehen. Der Getriebemechanismus 3 umfasst ferner zwei Ausgangswellen 20, die sich ausgehend von zwei Seiten des Differenzials 10 erstrecken, wobei die zwei Antriebswellen 20 jeweils an ein Rad (nicht dargestellt) eines Fahrzeugs angeschlossen sind. Leistung, die aus einer Antriebsmaschine (beispielsweise aus dem Elektromotor) stammt, wird auf das Hauptuntersetzungszahnrad 12 an dem Differenzialgehäuse 11 übertragen, um somit das Differenzial 10 zum Drehen anzutreiben. Wie den Fachleuten auf diesem Gebiet bekannt ist, treibt das Differenzial 10 über ein Planetenrad und ein Achswellenrad, die darin vorgesehen sind, die zwei Ausgangswellen 20 zum Drehen an, womit Leistung auf ein Rad des Fahrzeugs übertragen wird.

Des Weiteren können zwei hohle Stützwellen 30, die koaxial mit den zwei Ausgangswellen 20 angeordnet sind, jeweils an einer Seite des Differenzialgehäuses 11 befestigt sein. Die zwei Stützwellen 30 sind von einem Lager drehbar abgestützt, sodass das Differenzial 10 ebenfalls drehbar abgestützt ist. Jedoch wird die vorliegende Erfindung nicht darauf eingeschränkt und vielmehr kann das Differenzialgehäuse 11 auf andere Weise, die für Fachleute auf diesem Gebiet bekannt ist, drehbar abgestützt sein.

Wie in Fig. 1 gezeigt, weist der Elektromotor 2 eine an einem Rotor befestigte hohle Rotorwelle 40 auf. Die hohle Rotorwelle 40 ist koaxial mit der Ausgangswelle 20 des Differenzials 10 angeordnet, sodass es sich bei dem in Fig. 1 gezeigten Antriebssystem um ein sogenanntes koaxiales elektrisches Antriebssystem handelt.

Wie oben aufgeführt, kann der Getriebemechanismus 3 nach der vorliegenden Erfindung eine Drehzahlverstellung ermöglichen. Die Drehzahlverstellungsfunktion wird durch eine Umschalteinrichtung 50 ermöglicht, wie unten näher erläutert wird.

Der Getriebemechanismus 3 umfasst einen ersten Zahnradsatz, der aus einem ersten Zahnrad 51 und einem zweiten Zahnrad 52, die in Eingriff miteinander stehen, gebildet ist. Das erste Zahnrad 51 ist koaxial mit den zwei Ausgangswellen 20 des Differenzials 10 und somit auch koaxial mit der hohlen Rotorwelle 40 des Elektromotors 2 angeordnet. In diesem Beispiel kann das erste Zahnrad 51 über ein Lager drehbar an der Stützwelle 30, die an dem Differenzialgehäuse 11 befestigt ist, angeordnet sein. Jedoch wird die vorliegende Erfindung nicht darauf eingeschränkt und vielmehr kann das erste Zahnrad 51 auf andere Weise, die für Fachleute auf diesem Gebiet bekannt ist, koaxial mit der Ausgangswelle 20 des Differenzials 10 angeordnet und drehbar abgestützt sein. Die hohle Rotorwelle 40 des Elektromotors 2 ist an das erste Zahnrad 51 angeschlossen, sodass Leistung, die das Fahrzeug zum Fahren antreibt, in das erste Zahnrad 51 eingegeben wird. In diesem Beispiel ist der Radius des ersten Zahnrads 51 geringer als der Radius des zweiten Zahnrads 52, um eine Untersetzung zu erreichen. Des Weiteren ist das zweite Zahnrad 52 an einer drehbaren ersten Zwischenwelle 60 befestigt, um sich damit zusammen mitzudrehen. Wie in der Zeichnung gezeigt, kann die erste Zwischenwelle 60 durch ein Lager drehbar abgestützt sein.

Der Getriebemechanismus 3 umfasst einen zweiten Zahnradsatz, der aus einem dritten Zahnrad 53 und dem an dem Differenzialgehäuse 11 angeordneten Hauptuntersetzungszahnrad 12, die in Eingriff miteinander stehen, gebildet ist. Das dritte Zahnrad 53 ist koaxial mit dem zweiten Zahnrad 52 des ersten Zahnradsatzes angeordnet. Konkret ist das dritte Zahnrad 53 drehbar an der ersten Zwischenwelle 60 angeordnet. In diesem Beispiel ist der Radius des dritten Zahnrads 53 geringer als der Radius des an dem Differenzialgehäuse 11 angeordneten Hauptuntersetzungszahnrads 12, um eine Untersetzung zu erreichen.

Der Getriebemechanismus 3 umfasst einen dritten Zahnradsatz, der aus einem vierten Zahnrad 54 und einem fünften Zahnrad 55, die in Eingriff miteinander stehen, gebildet ist. Das vierte Zahnrad 54 ist koaxial mit dem zweiten Zahnrad 52 des ersten Zahnradsatzes und somit auch koaxial mit dem dritten Zahnrad 53 des zweiten Zahnradsatzes angeordnet. Konkret ist das vierte Zahnrad 54 drehbar an der ersten Zwischenwelle 60 angeordnet. Das fünfte Zahnrad 55 ist koaxial mit den zwei Ausgangswellen 20 des Differenzials 10 und somit auch koaxial mit der hohlen Rotorwelle 40 des Elektromotors 2 angeordnet. In diesem Beispiel kann das fünfte Zahnrad 55 über ein Lager drehbar an der Stützwelle 30, die an dem Differenzialgehäuse 11 befestigt ist, angeordnet sein. Jedoch wird die vorliegende Erfindung nicht darauf eingeschränkt und vielmehr kann das fünfte Zahnrad 55 auf andere Weise, die für Fachleute auf diesem Gebiet bekannt ist, koaxial mit der Ausgangswelle 20 des Differenzials 10 angeordnet und drehbar abgestützt sein. In diesem Beispiel ist der Radius des vierten Zahnrads 54 geringer als der Radius des fünften Zahnrads 55, um eine Untersetzung zu erreichen.

Der Getriebemechanismus 3 umfasst einen vierten Zahnradsatz, der aus einem sechsten Zahnrad 56 und einem siebten Zahnrad 57, die an ein und derselben Welle befestigt sind, gebildet ist. In diesem Beispiel sind das sechste Zahnrad 56 und das siebte Zahnrad 57 an einer drehbaren zweiten Zwischenwelle 70 befestigt, um sich damit zusammen mitzudrehen. Wie in der Zeichnung gezeigt, kann die zweite Zwischenwelle 70 durch ein Lager drehbar abgestützt sein. Das sechste Zahnrad 56 steht in Eingriff mit dem fünften Zahnrad 55 des dritten Zahnradsatzes, und das siebte Zahnrad 57 in Eingriff mit dem an dem Differenzialgehäuse 11 angeordneten Hauptuntersetzungszahnrad 12 steht. In diesem Beispiel ist der Radius des fünften Zahnrads 55 geringer als der Radius des sechsten Zahnrads 56 und der Radius des siebten Zahnrads 57 geringer als der Radius des an dem Differenzialgehäuse 11 angeordneten Hauptuntersetzungszahnrads 12, um eine Untersetzung zu erreichen.

Der Getriebemechanismus 3 umfasst ferner eine Umschalteinrichtung 50. Die Umschalteinrichtung 50 ist koaxial mit dem zweiten Zahnrad 52 des ersten Zahnradsatzes angeordnet und wird von dem zweiten Zahnrad 52 angetrieben. Konkret kann es sich bei der Umschalteinrichtung 50 um eine Mitnahmeeinrichtung handeln, die an der ersten Zwischenwelle 60 befestigt ist und sich somit zusammen mit der ersten Zwischenwelle 60 und dem zweiten Zahnrad 52 des ersten Zahnradsatzes mitdreht. Die Umschalteinrichtung 50 kann selektiv an das dritte Zahnrad 53 oder das vierte Zahnrad 54, das drehbar an der ersten Zwischenwelle 60 angeordnet ist, gekoppelt werden, sodass sich das dritte Zahnrad 53 oder das vierte Zahnrad 54 synchron mit dem zweiten Zahnrad 52 mitdreht.

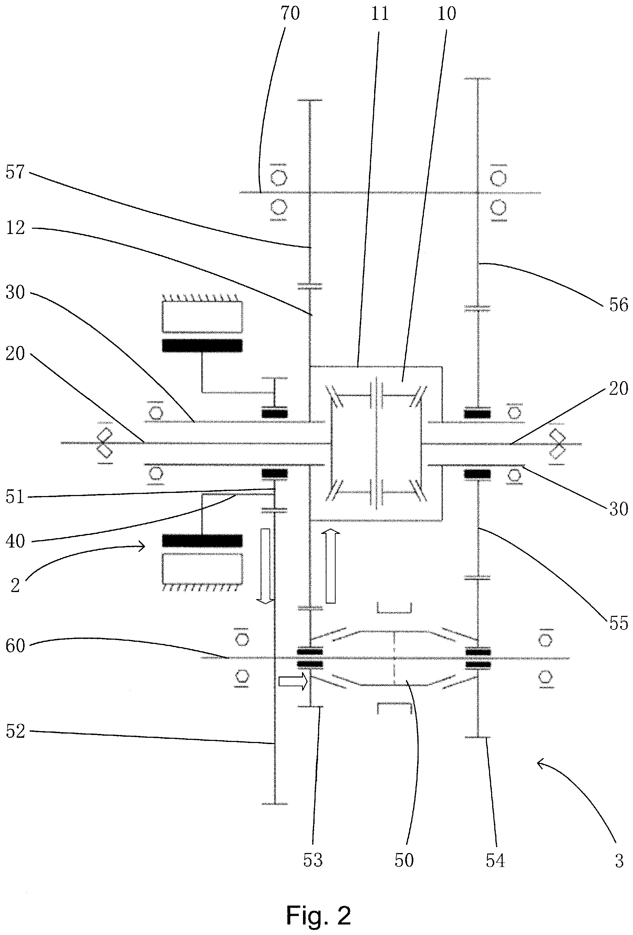

Wie mit dem Pfeil in Fig. 2 gezeigt, wird Leistung aus dem Elektromotor 2 bei an das dritte Zahnrad 53 gekoppelter Umschalteinrichtung 50 über das erste Zahnrad 51, das zweite Zahnrad 52, das dritte Zahnrad 53 und das an dem Differenzialgehäuse 11 angeordnete Hauptuntersetzungszahnrad 12 (erster Weg) auf das Differenzial 10 übertragen, wobei nun der Getriebemechanismus 3 in einem ersten Gang arbeitet. In dem ersten Gang kann eine zweistufige Untersetzung erreicht werden.

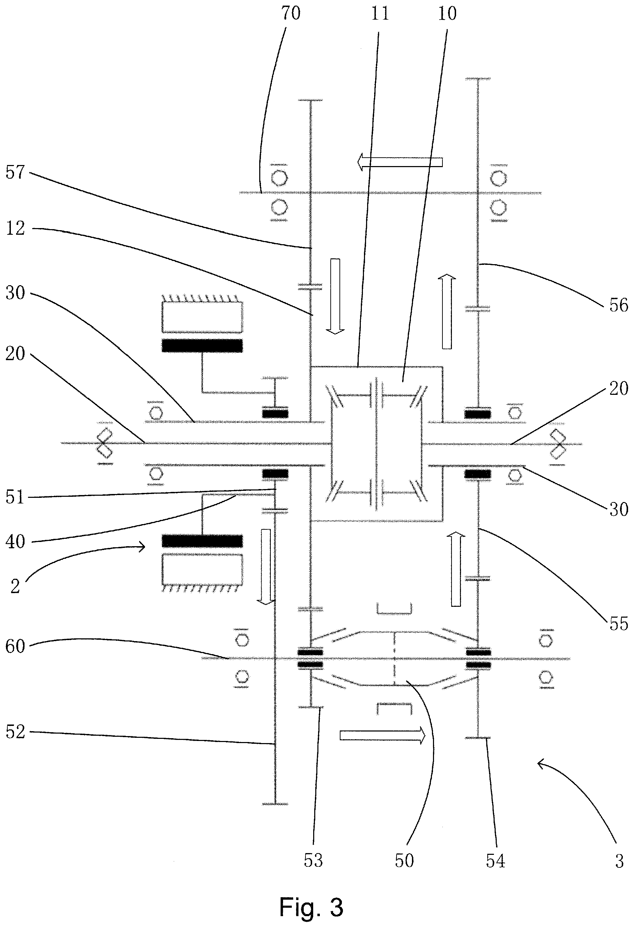

Wie mit dem Pfeil in Fig. 3 gezeigt, wird Leistung aus dem Elektromotor 2 bei an das vierte Zahnrad 54 gekoppelter Umschalteinrichtung 50 über das erste Zahnrad 51, das zweite Zahnrad 52, das vierte Zahnrad 54, das fünfte Zahnrad 55, das sechste Zahnrad 56, das siebte Zahnrad 57 und das an dem Differenzialgehäuse 11 angeordnete Hauptuntersetzungszahnrad 12 (zweiter Weg) auf das Differenzial 10 übertragen, wobei nun der Getriebemechanismus 3 in einem zweiten Gang arbeitet. In dem zweiten Gang kann eine vierstufige Untersetzung erreicht werden.

In dem in Fig. 1 gezeigten Ausführungsbeispiel sind das erste Zahnrad 51, das zweite Zahnrad 52, das dritte Zahnrad 53, das Hauptuntersetzungszahnrad 12 und das siebte Zahnrad 57 auf einer Seite des Differenzials 10 in der axialen Richtung angeordnet, und das vierte Zahnrad 54, das fünfte Zahnrad 55 und das sechste Zahnrad 56 sind auf der axial anderen Seite des Differenzials 10 angeordnet. Jedoch wird die vorliegende Erfindung nicht darauf eingeschränkt und vielmehr können das erste Zahnrad 51, das zweite Zahnrad 52, das dritte Zahnrad 53, das Hauptuntersetzungszahnrad 12, das vierte Zahnrad 54, das fünfte Zahnrad 55, das sechste Zahnrad 56 und das siebte Zahnrad 57 alternativ dazu auf ein und derselben Seite des Differenzials 10 in der axialen Richtung angeordnet sein. Beispielsweise können das vierte Zahnrad 54, das fünfte Zahnrad 55 und das sechste Zahnrad 56 auf der gleichen Seite des Differenzials 10 wie der Elektromotor 2, beispielsweise zwischen dem ersten Zahnradsatz und dem Differenzial 10, angeordnet sein.

Obwohl die spezifischen Ausführungsformen der vorliegenden Erfindung oben beschrieben werden, soll der Fachmann verstehen, dass dies nur Beispiele sind, und dass der Schutzumfang der vorliegenden Erfindung durch die beigefügten Ansprüche definiert wird. Durchschnittsfachleute auf diesem Gebiet können ohne Verlassen der Prinzipien und der Grundideen der vorliegenden Erfindung verschiedene Abänderungen und Modifikationen an solchen Ausführungsformen vornehmen, welche Abänderungen und Modifikationen ebenfalls unter den Schutzumfang der Erfindung fallen.

## Patentansprüche

1. Getriebemechanismus (3) für ein Kraftfahrzeug, der Getriebemechanismus umfasst:
ein Differenzial (10), das ein Differenzialgehäuse aufweist, an dem ein Hauptuntersetzungszahnrad vorgesehen ist,
zwei Ausgangswellen (20) die sich ausgehend von zwei Seiten des Differenzials erstrecken, wobei die zwei Ausgangswellen jeweils Leistung auf ein Rad eines Fahrzeugs übertragen,
einen ersten Zahnradsatz, der aus einem ersten Zahnrad (51) und einem zweiten Zahnrad (52), die miteinander in Eingriff stehen, gebildet ist,
wobei das erste Zahnrad koaxial mit den zwei Ausgangswellen angeordnet ist und Leistung, die das Fahrzeug zum Fahren antreibt, in das erste Zahnrad eingegeben wird,
einen zweiten Zahnradsatz, der aus einem dritten Zahnrad (53) und dem an dem Differenzialgehäuse angeordneten Hauptuntersetzungszahnrad (12), die miteinander in Eingriff stehen, gebildet ist, wobei das dritte Zahnrad koaxial mit dem zweiten Zahnrad angeordnet ist,
einen dritten Zahnradsatz, der aus einem vierten Zahnrad (54) und einem fünften Zahnrad (55), die miteinander in Eingriff stehen, gebildet ist,
wobei das vierte Zahnrad koaxial mit dem zweiten Zahnrad angeordnet ist, **dadurch gekennzeichnet, dass**
das fünfte Zahnrad koaxial mit den zwei Ausgangswellen angeordnet ist, und, dass der Getriebemechanismus ferner
einen vierten Zahnradsatz, der ein sechstes Zahnrad (56) und ein siebtes Zahnrad (57), die an ein und derselben Welle befestigt sind, umfasst, wobei das sechste Zahnrad in Eingriff mit dem fünften Zahnrad und das siebte Zahnrad in Eingriff mit dem an dem Differenzialgehäuse angeordneten Hauptuntersetzungszahnrad steht, und
eine Umschalteinrichtung (50), die koaxial mit dem zweiten Zahnrad angeordnet ist und von dem zweiten Zahnrad angetrieben wird, wobei die Umschalteinrichtung selektiv an das dritte Zahnrad oder das vierte Zahnrad gekoppelt werden kann.

2. Getriebemechanismus nach Anspruch 1, **dadurch gekennzeichnet, dass** der Getriebemechanismus ferner zwei hohle Stützwellen (30), die jeweils an einer Seite des Differenzialgehäuses befestigt sind, umfasst, wobei die zwei hohlen Stützwellen koaxial mit den Ausgangswelten (20) angeordnet und von einem Lager drehbar abgestützt sind.

3. Getriebemechanismus nach Anspruch 2, **dadurch gekennzeichnet, dass** das erste Zahnrad (51) des ersten Zahnradsatzes und das fünfte Zahnrad (55) des dritten Zahnradsatzes jeweils über ein Lager drehbar an einer jeweiligen der zwei hohlen Stützwellen angeordnet sind.

4. Getriebemechanismus nach Anspruch 1, **dadurch gekennzeichnet, dass** es sich bei der Umschalteinrichtung (50) um eine Mitnahmeeinrichtung handelt.

5. Getriebemechanismus nach Anspruch 1, **dadurch gekennzeichnet, dass** das erste Zahnrad (51), das zweite Zahnrad (52), das dritte Zahnrad (53), das Hauptuntersetzungszahnrad (12) und das siebte Zahnrad (57) auf einer Seite des Differenzials in der axialen Richtung angeordnet sind, und das vierte Zahnrad (54), das fünfte Zahnrad (55) und das sechste Zahnrad (56) auf der anderen Seite des Differenzials in der axialen Richtung angeordnet sind.

6. Getriebemechanismus nach Anspruch 1, **dadurch gekennzeichnet, dass** das erste Zahnrad (51), das zweite Zahnrad (52), das dritte Zahnrad (53), das Hauptuntersetzungszahnrad (12), das vierte Zahnrad (54), das fünfte Zahnrad (55), das sechste Zahnrad (56) und das siebte Zahnrad (57) auf ein und derselben Seite des Differenzials in der axialen Richtung angeordnet sind.

7. Getriebemechanismus nach Anspruch 1, **dadurch gekennzeichnet, dass** der Getriebemechanismus ferner eine über ein Lager drehbar abgestützte erste Zwischenwelle (60) und eine über ein Lager drehbar abgestützte zweite Zwischenwelle (70) umfasst, wobei das zweite Zahnrad des ersten Zahnradsatzes und die Umschalteinrichtung an der ersten Zwischenwelle befestigt sind, wobei das dritte Zahnrad des zweiten Zahnradsatzes und das vierte Zahnrad des dritten Zahnradsatzes drehbar an der ersten Zwischenwelle angeordnet sind, und wobei das sechste Zahnrad und das siebte Zahnrad des vierten Zahnradsatzes an der zweiten Zwischenwelle befestigt sind.

8. Getriebemechanismus nach Anspruch 1, **dadurch gekennzeichnet, dass** der Radius des ersten Zahnrads (51) geringer als der Radius des zweiten Zahnrads (52), der Radius des dritten Zahnrads (53) geringer als der Radius des Hauptuntersetzungszahnrads (12), der Radius des vierten Zahnrads (54) geringer als der Radius des fünften Zahnrads (55), der Radius des fünften Zahnrads (55) geringer als der Radius des sechsten Zahnrads (56), und der Radius des siebten Zahnrads (57) geringer als der Radius des Hauptuntersetzungszahnrads (12) ist.

9. Antriebssystem für ein Kraftfahrzeug, **dadurch gekennzeichnet, dass** das Antriebssystem umfasst:
einen Elektromotor (2), der eine hohle Rotorwelle (40) aufweist,
einen Getriebemechanismus nach Anspruch 1,
wobei die hohle Rotorwelle des Elektromotors koaxial mit den zwei Ausgangswellen (20) angeordnet und an das erste Zahnrad (51) des ersten Zahnradsatzes des Getriebemechanismus angeschlossen ist.

## Claims

1. Transmission mechanism (3) for a motor vehicle, the transmission mechanism comprising:
a differential (10)
which has a differential housing, on which a main reduction gearwheel is provided,
two output shafts (20)
which extend starting from two sides of the differential, the two output shafts each transmitting power to a wheel of a vehicle,
a first gearwheel set which is formed from a first gearwheel (51) and a second gearwheel (52) which are in engagement with one another,
the first gearwheel being arranged coaxially with respect to the two output shafts, and power which drives the vehicle for travelling being input into the first gearwheel,
a second gearwheel set which is formed from a third gearwheel (53) and the main reduction gearwheel (12), arranged on the differential housing, which are in engagement with one another, the third gearwheel being arranged coaxially with respect to the second gearwheel, a third gearwheel set which is formed from a fourth gearwheel (54) and a fifth gearwheel (55) which are in engagement with one another,
the fourth gearwheel being arranged coaxially with respect to the second gearwheel, **characterized in that** the fifth gearwheel is arranged coaxially with respect to the two output shafts, and **in that**, furthermore, the transmission mechanism comprises a fourth gearwheel set which comprises a sixth gearwheel (56) and a seventh gearwheel (57) which are fastened to one and the same shaft,
the sixth gearwheel being in engagement with the fifth gearwheel, and the seventh gearwheel being in engagement with the main reduction gearwheel which is arranged on the differential housing, and
a switchover device (50) which is arranged coaxially with respect to the second gearwheel and is driven by the second gearwheel, it being possible for the switchover device to be coupled selectively to the third gearwheel or the fourth gearwheel.

2. Transmission mechanism according to Claim 1, **characterized in that**, furthermore, the transmission mechanism comprises two hollow supporting shafts (30) which are each fastened to a side of the differential housing, the two hollow supporting shafts being arranged coaxially with respect to the output shaft (20) and being supported rotatably by a bearing.

3. Transmission mechanism according to Claim 2, **characterized in that** the first gearwheel (51) of the first gearwheel set and the fifth gearwheel (55) of the third gearwheel set are each arranged rotatably via a bearing on a respective one of the two hollow supporting shafts.

4. Transmission mechanism according to Claim 1, **characterized in that** the switchover device (50) is a driving device.

5. Transmission mechanism according to Claim 1, **characterized in that** the first gearwheel (51), the second gearwheel (52), the third gearwheel (53), the main reduction gearwheel (12) and the seventh gearwheel (57) are arranged on one side of the differential in the axial direction, and the fourth gearwheel (54), the fifth gearwheel (55) and the sixth gearwheel (56) are arranged on the other side of the differential in the axial direction.

6. Transmission mechanism according to Claim 1, **characterized in that** the first gearwheel (51), the second gearwheel (52), the third gearwheel (53), the main reduction gearwheel (12), the fourth gearwheel (54), the fifth gearwheel (55), the sixth gearwheel (56) and the seventh gearwheel (57) are arranged on one and the same side of the differential in the axial direction.

7. Transmission mechanism according to Claim 1, **characterized in that**, furthermore, the transmission mechanism comprises a first intermediate shaft (60), supported rotatably via a bearing, and a second intermediate shaft (70), supported rotatably via a bearing, the second gearwheel of the first gearwheel set and the switchover device being fastened to the first intermediate shaft, the third gearwheel of the second gearwheel set and the fourth gearwheel of the third gearwheel set being arranged rotatably on the first intermediate shaft, and the sixth gearwheel and the seventh gearwheel of the fourth gearwheel set being fastened to the second intermediate shaft.

8. Transmission mechanism according to Claim 1, **characterized in that** the radius of the first gearwheel (51) is smaller than the radius of the second gearwheel (52), the radius of the third gearwheel (53) is smaller than the radius of the main reduction gearwheel (12), the radius of the fourth gearwheel (54) is smaller than the radius of the fifth gearwheel (55), the radius of the fifth gearwheel (55) is smaller than the radius of the sixth gearwheel (56), and the radius of the seventh gearwheel (57) is smaller than the radius of the main reduction gearwheel (12).

9. Drive system for a motor vehicle, **characterized in that** the drive system comprises:
an electric motor (2) which has a hollow rotor shaft (40),
a transmission mechanism according to Claim 1,
the first rotor shaft of the electric motor being arranged coaxially with respect to the two output shafts (20) and being connected to the first gearwheel (51) of the first gearwheel set of the transmission mechanism.

## Revendications

1. Mécanisme de transmission (3) pour un véhicule automobile, le mécanisme de transmission comprenant :
un différentiel (10), qui présente un boîtier de différentiel sur lequel une roue dentée principale de réduction est prévue,
deux arbres de sortie (20), qui s'étendent à partir de deux côtés du différentiel, les deux arbres de sortie transmettant chacun de la puissance à une roue d'un véhicule,
un premier jeu de roues dentées, qui est formé d'une première roue dentée (51), d'une deuxième roue dentée (52), qui sont en prise l'une avec l'autre,
la première roue dentée étant agencée coaxialement aux deux arbres de sortie et la puissance qui entraîne le véhicule à rouler étant entrée dans la première roue dentée,
un deuxième jeu de roues dentées, qui est formé d'une troisième roue dentée (53) et de la roue dentée principale de réduction (12) agencée sur le boîtier de différentiel, qui sont en prise l'une avec l'autre, la troisième roue dentée étant agencée coaxialement à la deuxième roue dentée,
un troisième jeu de roues dentées, qui est formé d'une quatrième roue dentée (54) et d'une cinquième roue dentée (55) qui sont en prise l'une avec l'autre,
la quatrième roue dentée étant agencée coaxialement à la deuxième roue dentée, **caractérisé en ce que** la cinquième roue dentée est agencée coaxialement aux deux arbres de sortie, et **en ce que** le mécanisme de transmission comprend en outre un quatrième jeu de roues dentées, qui est formé d'une sixième roue dentée (56) et
d'une septième roue dentée (57), qui sont fixées à un même arbre,
la sixième roue dentée étant en prise avec la cinquième roue dentée et la septième roue dentée étant en prise avec la roue dentée principale de réduction agencée sur le boîtier de différentiel, et
un dispositif de commutation (50), qui est agencé coaxialement à la deuxième roue dentée et entraîné par la deuxième roue dentée, le dispositif de commutation pouvant être couplé sélectivement à la troisième roue dentée ou à la quatrième roue dentée.

2. Mécanisme de transmission selon la revendication 1, **caractérisé en ce que** le mécanisme de transmission comprend en outre deux arbres de support creux (30), qui sont fixés chacun à un côté du boîtier de différentiel, les deux arbres de support creux étant agencés coaxialement aux arbres de sortie (20) et étant supportés de manière rotative par un palier.

3. Mécanisme de transmission selon la revendication 2, **caractérisé en ce que** la première roue dentée (51) du premier jeu de roues dentées et la cinquième roue dentée (55) du troisième jeu de roues dentées sont agencées chacune de manière rotative sur l'un respectif des deux arbres de support creux par l'intermédiaire d'un palier.

4. Mécanisme de transmission selon la revendication 1, **caractérisé en ce que** le dispositif de commutation (50) consiste en un dispositif d'entraînement.

5. Mécanisme de transmission selon la revendication 1, **caractérisé en ce que** la première roue dentée (51), la deuxième roue dentée (52), la troisième roue dentée (53), la roue dentée principale de réduction (12) et la septième roue dentée (57) sont agencées d'un côté du différentiel dans la direction axiale, et la quatrième roue dentée (54), la cinquième roue dentée (55) et la sixième roue dentée (56) sont agencées de l'autre côté du différentiel dans la direction axiale.

6. Mécanisme de transmission selon la revendication 1, **caractérisé en ce que** la première roue dentée (51), la deuxième roue dentée (52), la troisième roue dentée (53), la roue dentée principale de réduction (12), la quatrième roue dentée (54), la cinquième roue dentée (55), la sixième roue dentée (56) et la septième roue dentée (57) sont agencées d'un seul et même côté du différentiel dans la direction axiale.

7. Mécanisme de transmission selon la revendication 1, **caractérisé en ce que** le mécanisme de transmission comprend en outre un premier arbre intermédiaire (60) supporté de manière rotative par l'intermédiaire d'un palier et un deuxième arbre intermédiaire (70) supporté de manière rotative par l'intermédiaire d'un palier, la deuxième roue dentée du premier jeu de roues dentées et le dispositif de commutation étant fixés au premier arbre intermédiaire, la troisième roue dentée du deuxième jeu de roues dentées et la quatrième roue dentée du troisième jeu de roues dentées étant agencées de manière rotative sur le premier arbre intermédiaire, et la sixième roue dentée et la septième roue dentée du quatrième jeu de roues dentées étant fixées au deuxième arbre intermédiaire.

8. Mécanisme de transmission selon la revendication 1, **caractérisé en ce que** le rayon de la première roue dentée (51) est inférieur au rayon de la deuxième roue dentée (52), le rayon de la troisième roue dentée (53) est inférieur au rayon de la roue dentée principale de réduction (12), le rayon de la quatrième roue dentée (54) est inférieur au rayon de la cinquième roue dentée (55), le rayon de la cinquième roue dentée (55) est inférieur au rayon de la sixième roue dentée (56), et le rayon de la septième roue dentée (57) est inférieur au rayon de la roue dentée principale de réduction (12).

9. Système d'entraînement pour un véhicule automobile, **caractérisé en ce que** le système d'entraînement comprend :
un moteur électrique (2) qui présente un arbre de rotor creux (40),
un mécanisme de transmission selon la revendication 1,
l'arbre de rotor creux du moteur électrique étant agencé coaxialement aux deux arbres de sortie (20) et étant raccordé à la première roue dentée (51) du premier jeu de roues dentées du mécanisme de transmission.
